# EUROPEAN PATENT APPLICATION

(11) **EP 4 741 952 A1**
(43) Date of publication of application: **13.05.2026**
(21) Application number: 25214293.0
(22) Date of filing: 07.11.2025
(51) Int. Cl.: G05B 9/03

(54) **REDUNDANT SAFETY CONTROL FOR A LINEAR MOTOR CONVEYOR**

(30) Priority: 08.11.2024 US 202463718374 P
(71) Applicant: ATS Corporation, Cambridge, ON N3H 4R7 (CA)
(72) Inventor: WOBLICK, Frank, Cambridge, Ontario (CA)
(74) Representative: Noble, Nicholas

(57) **Abstract**

Safe torque-off (STO) functionality can be used to ensure the driving power to at least a section of a linear motor is de-energized. The STO may use a plurality of safety mechanisms for redundantly de-energizing the coils of the linear motor. The safety mechanisms may include disconnecting the motor power supply from power circuitry, shorting the motor power supply to ground, and/or disconnecting an operating supply from control circuitry.

## Description

### RELATED APPLICATIONS

The current application claims priority to U.S. Provisional Application 63/718,374, filed November 8th, 2024 and entitled "Redundant Safety Control For A Linear Motor Conveyor," the entire contents of which are incorporated herein by reference in their entirety.

### TECHNICAL FIELD

The current application relates to redundant safety control for a linear motor conveyor system and in particular to de-energizing driving power for at least a portion of the linear motor conveyor.

### BACKGROUND

Linear motor conveyor systems use electromagnetics to controllably move shuttles along a track. The shuttles can convey parts, components or other tooling through different manufacturing and/or packaging processes. Track sections include a number of individually controllable coils that can provide a motive force to the shuttles.

In an operating environment, it is desirable, and potentially necessary, to protect individuals from potential contact with moving components such as the shuttles. Such protection may be provided by enclosing the conveyor system and other tooling within an enclosure. However, it may be necessary for an individual to enter the enclosed area, for example, to fix a problem, replace, refill or empty components etc. It is desirable to ensure that the shuttles cannot move during such operations, or in other scenarios where an individual or object may be in a position that could be hit by a moving shuttle.

One way to ensure that a shuttle cannot move is to turn off the driving power to the conveyor system. While such functionality, often referred to as Safe Torque-Off (STO), is effective at preventing unintended movement of a shuttle, they can be complex to implement for linear motor conveyors due at least in part to the linear arrangement of the large number of driving coils. Existing STO functionality may turn off the supply power to entire large sections of a linear motor conveyor.

Additional, alternative and/or improved STO functionality for linear motor conveyor systems is desired.

### BRIEF DESCRIPTION OF THE DRAWINGS

Further features and advantages of the present disclosure will become apparent from the following detailed description, taken in combination with the appended drawings, in which:
FIG. 1 depicts an illustrative linear motor conveyor system;
FIG. 2 depicts an illustrative implementation of the safe torque-off (STO) functionality;
FIG. 3 depicts a further illustrative implementation of the STO functionality;
FIG. 4 depicts an illustrative track section of a linear motor conveyor system using STO functionality;
FIG. 5 depicts a further track section of a linear motor conveyor system using STO functionality;
FIG. 6 depicts a further track section of a linear motor conveyor system using STO functionality with feedback signals;
FIG. 7 depicts a method of implementing the STO functionality;
FIG. 8 depicts a further implementation of the STO functionality on at least a portion of a track section;
FIG. 9 depicts a further illustrative implementation of the STO functionality;
FIG. 10 depicts a further illustrative implementation of the STO functionality; and
FIG. 11 depicts a method of implementing the STO functionality.

### DETAILED DESCRIPTION

In accordance with the present disclosure there is provided a redundant safety control system for a linear motor conveyor comprising: safety control inputs comprising first and second inputs for receiving respective first and second safety signals indicating a condition requiring de-energizing driving power of at least a section of the linear motor conveyor; a first safety circuit controlled by the safety control inputs, the first safety circuit controllably disconnecting power supplied to a power circuit based on the control inputs, the power circuit providing power to drive at least one coil of the at least one section of the linear motor conveyor; and a second safety circuit controlled by the safety control inputs, the second safety circuit shorting the power supplied to the power circuit to ground based on the second input control signal.

In a further embodiment of the redundant safety control system, the redundant safety control system further comprises a third safety circuit controlled by the safety control inputs, the third safety circuit disconnecting operating power supplied to control circuitry controlling the power circuit.

In a further embodiment of the redundant safety control system, the second safety circuit comprises an input signal delay to delay the shorting of the power relative to the disconnecting of the power supplied to the power circuit.

In a further embodiment of the redundant safety control system, the input signal delay provides a sufficient delay after disconnecting of the power supplied to the power circuit to avoid current transients when shorting of the power.

In a further embodiment of the redundant safety control system, the delay is at least 5ms.

In a further embodiment of the redundant safety control system, the delay is provided by a resistor capacitor (RC) delay circuit.

In a further embodiment of the redundant safety control system, the first safety circuit comprises a controllable eFuse.

In a further embodiment of the redundant safety control system, the power circuit comprises an H-bridge circuit.

In a further embodiment of the redundant safety control system, the second safety circuit shorts the power supplied to the power circuit through a MOSFET.

In a further embodiment of the redundant safety control system, the power circuit provides power to linear motor components for providing a motive force to the shuttles on the section of the linear motor conveyor.

In a further embodiment of the redundant safety control system, the power circuit is associated with a coil driver driving one or more coils of the linear motor conveyor.

In a further embodiment of the redundant safety control system, the track section comprises a plurality of coil drivers each for driving one or more respective coils of the linear motor conveyor.

In a further embodiment of the redundant safety control system, the redundant safety control system further comprises, for each of the plurality of coil drivers, a respective safety control circuit each comprising at least two of: a first safety circuit for disconnecting power to the respective coil driver; a second safety circuit for shorting power to the respective coil driver; and a third safety circuit for disconnecting operating power supplied to a power circuit of the respective coil driver.

In a further embodiment of the redundant safety control system, one or more of the plurality of safety signals are coupled through respective optocouplers.

In a further embodiment of the redundant safety control system, the first and second safety signals are set in response to one or more of: opening of a guarding door; detected presence of an operator in a controlled area; activation of an emergency stop switch; detection of an error at the conveyor; and a manually provided indication of a desire to stop movement of shuttles.

In a further embodiment of the redundant safety control system, the redundant safety control system further comprises one or more feedback signals providing an indication that no power is supplied to the power circuit.

In accordance with the present disclosure there is further provided a method of redundantly stopping movement of a shuttle on a track section of a linear motor conveyor, the method comprising: setting both a first safety signal and a second safety signal, the first and second safety signals indicating a condition requiring stoppage of shuttles moving on at least a section of the linear motor conveyor; disconnecting power supplied to a power circuit used to drive one or more coils of the linear motor conveyor in response to the safety signals; and disconnecting power supplied to the power circuit and shorting the power input of the power circuit to ground in response to the safety signals.

In a further embodiment of the method, the method further comprises delaying shorting the power to ground for a length of time after disconnecting the power in response to the second safety signal.

In a further embodiment of the method, the delay is at least 5ms.

In a further embodiment of the method, disconnecting the power supplied to the power circuit uses a controllable eFuse.

In a further embodiment of the method, shorting the power supplied to the power circuit uses a MOSFET.

In a further embodiment of the method, the method further comprises providing one or more feedback signals providing an indication that no power is supplied to the power circuit.

In accordance with the present disclosure there is further provided a non-transitory computer readable medium storing instructions which when executed by a processor perform a method according to any of the methods described above.

Safe torque-off functionality ensures that power cannot, or at least with low enough probability, be supplied to the driving coils of a motor when the STO is enabled. In linear motor conveyor systems, once the shuttles are stopped, the STO functionality may be enabled to ensure that they are not accidentally powered causing undesirable movement. The STO functionality described herein can be efficiently implemented within the individual track sections. Such an in-track implementation can provide various advantages including for example, a simplified system and installation as separate STO components do not need to be provided and integrated into the conveyor system; potentially finer control of what portion of the conveyor system the STO functionality is applied over, among other advantages. While it may be beneficial to incorporate the STO functionality into the track sections, or onto the circuitry within track sections, doing so requires an efficient implementation given that the STO functionality may need to be incorporated into a relatively large number of driving circuitry for the numerous coils in a linear motor track section.

As described further below, a linear motor conveyor has a plurality of coil drivers that can independently control one or more coils. The STO functionality is provided for each of the coil drivers and redundantly de-energizes the power supplied to the coils for driving the coils. The redundancy can be provided by a plurality of different safety channels or circuits that each independently prevent the motor power from being supplied to the coils. For example, the motor power supply power can be disconnected. Additionally, the motor power supply, or the power supplied to the coils for driving the coils, could be shorted to ground. Additionally, when the power supplied to the coils for driving the coils is controlled through control circuitry, the control power to the control circuitry can be disconnected, or possibly grounded, in order to prevent operation of the control circuitry and so prevent the coil power from being supplied.

In one embodiment, one safety channel of the STO disconnects the motor power supply, while a second channel shorts the motor power supply input to ground in order to ensure that the coil driver cannot be, or at least with an acceptably low probability is not, supplied with power that could cause a shuttle to move.

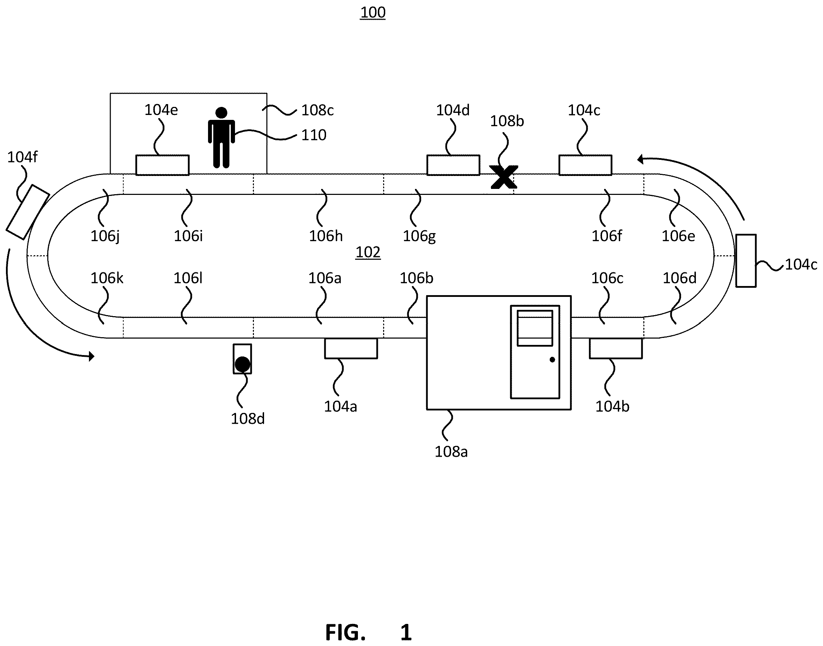

FIG. 1 depicts an illustrative linear motor conveyor system. The linear motor conveyor system 100 is depicted as a conveyor loop 102 on which a plurality of shuttles 104a..f (referred to collectively as shuttles 104) can move. The conveyor loop 102 is formed as a plurality of individual track sections 106a..106l (referred to collectively as track sections 106) that are joined together. Each of the track sections 106 include a plurality of electromagnetic coils (not shown in FIG. 1) that can be controllably energized in a manner that cause the shuttles 104 to move in a desired manner along the conveyor loop 102. It will be appreciated that although the conveyor is depicted as a simple loop, the linear motor conveyor can be provided in a wide range of configurations based on the particular application. Further, although the conveyor may generally be provided as closed loop in which shuttles circulate around the track, it is possible to have the conveyor arranged as an open-ended conveyor in which the shuttles move back and forth along the conveyor. Further, while the shuttles may circular around the loop generally in a clockwise, or anti-clockwise direction, the individual shuttles may over shorter sections move in opposite directions. Further, while the conveyor 102 is depicted in a horizontal orientation, it is possible for the conveyor to be arranged in a vertical or over-under orientation.

Regardless of the particular arrangement of the conveyor 102, there may be one or more areas along the track that may use safe torque-off (STO) functionality in order to ensure shuttles do not unintentionally move under power. FIG. 1 depicts various examples of scenarios where STO functionality may be used. A first example is depicted as guarding 108a that is provided around a section of the conveyor 102. The guarding 108a is depicted as an enclosed area with a door, although windows or other closeable openings could be provided. The guarding 108a can enclose the track section along with other tooling that may be operating at that point on the conveyor in order to ensure the safe operation of the process. This may include for example keeping individuals from physical contact with moving components, as well as providing other safety considerations such as providing a clean operating environment, containing process gases or off-gases that may occur as a result of the process etc. Regardless of the exact purpose of the guarding 108a, when the guarding is opened, the process is stopped and prevented from restarting or continuing until the guarding is closed. This can include the stopping of any shuttles that may be within or close to entering the guarding, as well as enabling the STO functionality that covers at least the section of track covered by the guarding. The stopping of the shuttles may be done using the conveyors and may be performed using various stopping profiles including normal stops, rapid stops, emergency stops, etc.

Another scenario in which STO functionality may be enabled is one in which an error or condition on the conveyor makes it unsafe for shuttles to travel of that track section. This is depicted in FIG. 1 as the 'X' 108b indicating some error or blockage on the track. When such a condition is detected, shuttles moving on those sections impacted by the condition or in the vicinity of the condition can be stopped and the appropriate STO functionality engaged to prevent further movement of the shuttles. If necessary, an individual may correct or at least assess the condition before resuming operating of the shuttles.

A further example of a scenario in which STO functionality may be enabled is in a monitored safety area 108c in which presence of individuals 110, or potentially other objects such as vehicles etc. within the safety area is prohibited. The presence of a person or other prohibited object within the safety area can be detected by one or more sensors and used to stop the movement of any shuttles within, or into, the safety area and then enable the STO functionality covering at least the safety area 108c until the person or object leave the safety area.

A further example of a scenario in which STO functionality can be used is depicted as an emergency stop button or switch 108d. Such emergency stop buttons may be used to quickly stop the conveyor in situations where an individual sees an unsafe or potentially unsafe condition. When the emergency stop button is activated, shuttles on the portion of the track covered by, or associated with, the emergency stop button are stopped and then the STO functionality engaged to ensure shuttles do not move unintentionally.

As described above, there are various reasons why the STO functionality may be engaged. Generally when engaging the STO functionality, any shuttles moving on the portion of track covered by the STO functionality being engaged are first brought to a stop and then the STO functionality engaged. If the STO functionality is engaged before the movement of a shuttle stops, the shuttle will not be able to slowed or stopped using the linear motor as it is de-energized by the STO functionality. It may be possible to stop the motion of the shuttle using other mechanisms such as brakes on the shuttle or short-circuiting of the drive coils 204 by the output stages of the coil driver in which case the STO functionality may be engaged while shuttles are moving.

Regardless of when the STO functionality is engaged, once engaged the linear motor of the section of track covered by the engaged STO functionality will not be energized and as such cannot provide a motive force, or torque, to the shuttles in order to either accelerate or decelerate the shuttles.

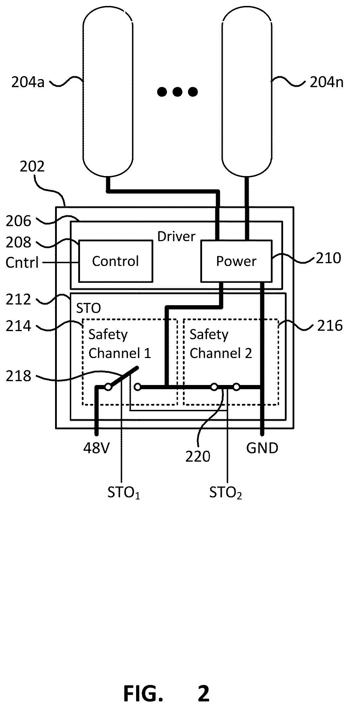

FIG. 2 depicts an illustrative implementation of the safe torque-off (STO) functionality. The STO functionality depicted in FIG. 2 may be provided by the electronics 202 controlling individual coils 204a..204n (referred to collectively as coils 204) of the linear motor over a section of the conveyor. The number of coils covered by an individual STO component may vary based on how the individual coils are driven and supplied with power.

The track electronics 202 controlling one or more coils along a section of the conveyor include some coil driver circuitry 206. The coil driver 206 may include control functionality that receives one or more control signals (Cntrl) that are used to individually control the power supplied to individual coils 204 by power circuitry 210. The control functionality can control the power circuitry to vary the power supplied to the individual coils. The power circuitry 210 can receive the motor power which may be provided from, for example, a 48V power supply, depicted as a 48V input and GND input in FIG. 2. Although depicted as 48V, the linear motor may operate at either higher or lower voltages.

Regardless of the operating voltage of the linear motor, STO circuitry 212 can be provided in the track electronics in order to redundantly de-energize the motor power driving the coils. The STO circuitry 212 may includes two safety channels 214, 216, which independently operate to de-energize the motor power supplied to the power circuitry to ensure the power circuitry cannot supply driving power to the coils. The first safety channel is depicted as a controllable switch 218 that opens in order to disconnect the motor power source from the power circuitry. The first safety channel may be controlled by a first STO signal (STO₁) which can cause the switch to either open, and disconnect the motor power source, or close and connect the motor power source.

The second safety channel 216 operates to short the motor power source to ground (GND) through a controllable switch 220 such that if the first safety channel were to fail for some reason, power would still not be supplied to the power circuit 210. The second switch 220 may be controlled by a second STO signal (STO₂). When shorting the motor power input to ground, if the switch 218 of the first safety channel is not open, the switch 220 of the second safety channel may need to be sized to handle a large amount of power without damage. For example, the power supply for the driving circuitry may be able to provide a short circuit current of 25A or more at 48V. While it is possible to design the components of the STO circuitry 212 to handle these power requirements, the second STO signal STO₂ may also control the switch 218 of the first safety channel 214 such that the switch will be opened by the second STO signal as well. With the first safety channel controlled by both the first and second safety signals STO₁, STO₂ even if only the STO₂ is successfully enabled, the switch 218 will still be opened and disconnect the motor power supply. As such, the components of the second safety channel can be designed to handle a lower power level.

In normal operation of the system, the STO control signals STO₁, STO₂ and their respective timings can be controlled by the system such the STO₁ signal is enabled before the STO₂ signal in order to provide a delay between disconnecting the motor power supply and shorting the motor power input to ground in order to avoid potential damage or other issues caused by transient voltages.

It is noted that if the power input is shorted to ground while the first switch 218 is closed, the electrical components of the second safety channel could be damaged by excessive power. In such a scenario, the excessive power draw by shorting the power supply to ground would trip or break fuses on the power input (not shown), which would cause the STO functionality to fail in a safe state in which power is not supplied to the power circuitry 210. However, such a scenario could require replacement or repairing of fuses and other components of the STO functionality or other conveyor electronics.

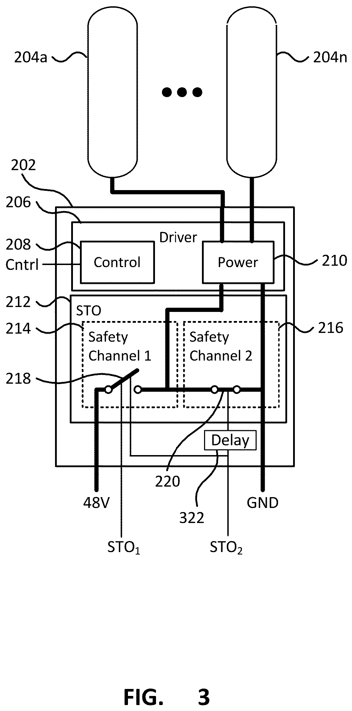

FIG. 3 depicts a further illustrative implementation of the STO functionality. The implementation is similar to that described above with reference to FIG. 2 and as such only the differences will be described. As described above, if the second safety channel 216 is operated to short the motor power input to ground while the power input is still connected to the motor power supply, for example because the STO₁ was not enabled before STO₂ or there was some failure in the signaling, the second safety signal STO₂ still attempts to disconnect the motor power supply. In FIG. 3 a signaling delay 322 is provided to the STO₂ signal controlling the switch 220 of the second safety channel 216. The signaling delay 322 ensures that the un-delayed STO₂ signal used to control the switch 218 of the first safety channel 214 first disconnects the motor power supply before the delayed STO₂ signal used to control the switch 220 of the second safety channel 216 shorts the motor power input to ground. As such, even if there is a signaling issue or failure and only the second safety channel signal is successfully provided, the second safety channel can be safely operated without damage by first disconnecting the motor power supply.

Again, as described above, if there is a failure in the switch 218 of the first safety channel 214 such that it cannot disconnect the motor power supply, the shorting of the input to ground by the second safety channel may damage one or more electrical components, which may in turn cause one or more fuses or breakers to blow. As such, while the safety channels can independently operate safely without damage under most conditions, including potential failure conditions, even in conditions where there are multiple failures, the system will fail in a safe state in which driving power is not supplied to the coils.

In the above, the switches of the safety channels may be provided by various electrical components, including for example by one or more MOSFETs or similar components.

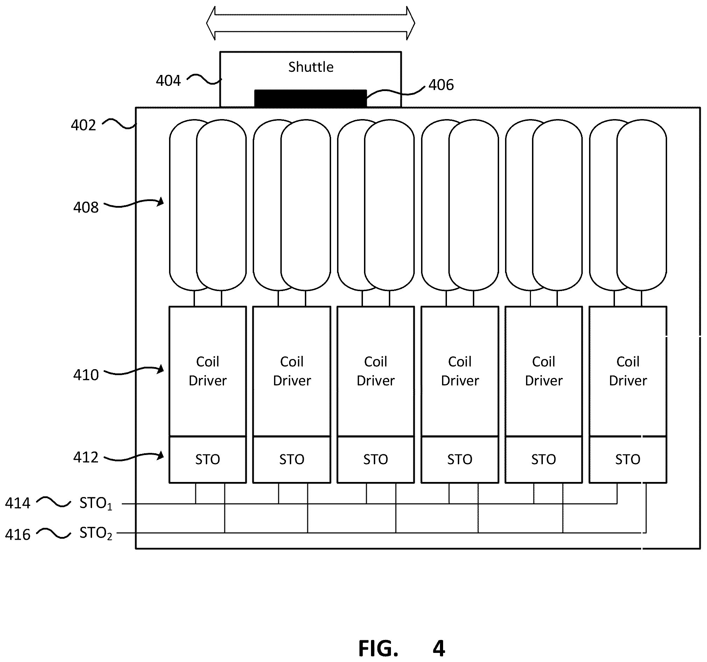

FIG. 4 depicts an illustrative track section of a linear motor conveyor system using STO functionality. A track section 402 is depicted in FIG. 4 on which a shuttle 404 can be independently controlled. The shuttle includes a magnet or magnet array 406 that interacts with a magnetic field generated by the current flowing in a plurality of electromagnetic coils 408. The power supplied to each individual coil can be controlled in order to provide a desired motion to the shuttle. Each track section may be of a fixed size, of one of a plurality of set sizes, or of a custom size. For example, track sections may be 1 meter in length. It is noted that the track section length of 1 meter is described for simplicity as it provides a track section length that can be easily integrated into a wide range of applications and footprints. The track lengths may be larger or smaller. The track sections each include a plurality of individual coils 408 which are controlled by a plurality of coil drivers 410. As depicted each of the coil drivers 410 controls the power supplied to two of the coils 408. Each of the coil drivers 410 include, or associated with respective STO functionality 412 which can safely and redundantly de-energize the coils of the coil driver the STO functionality is associated with. In typical applications, the STO functionality is applied to relatively large sections of a track as opposed to individual coils. Accordingly, while each of the coil drivers 412 are associated with respective STO functionality that can be independently enabled, all of the STO functionality of the track section may be controlled by the same STO signals 414, 416 namely STO₁ and STO₂ as depicted in FIG. 4. As such, the STO functionality depicted in FIG. 4 can de-energize all of the coils of a track section 402. Enabling STO functionality along individual track sections may provide an acceptable balance between the additional complexity of providing additional STO control signals and the length of track section that is de-energized simultaneously. It may be desirable to minimize, or at least reduce, a length of track that is de-energized. For example, if some guarding encloses a 1m track section, and the guarding is opened, it may be desirable to only enable the STO functionality for the length of track enclosed by the guarding. Although not depicted in FIG. 4, it is possible to use the same STO signals for enabling the STO functionality across multiple track sections.

While the above describes all of the STO functionality of a single track section as being controlled by the same STO signals, it is possible for the single track section to be broken into two or more sections, each of which are controlled by respective STO signals.

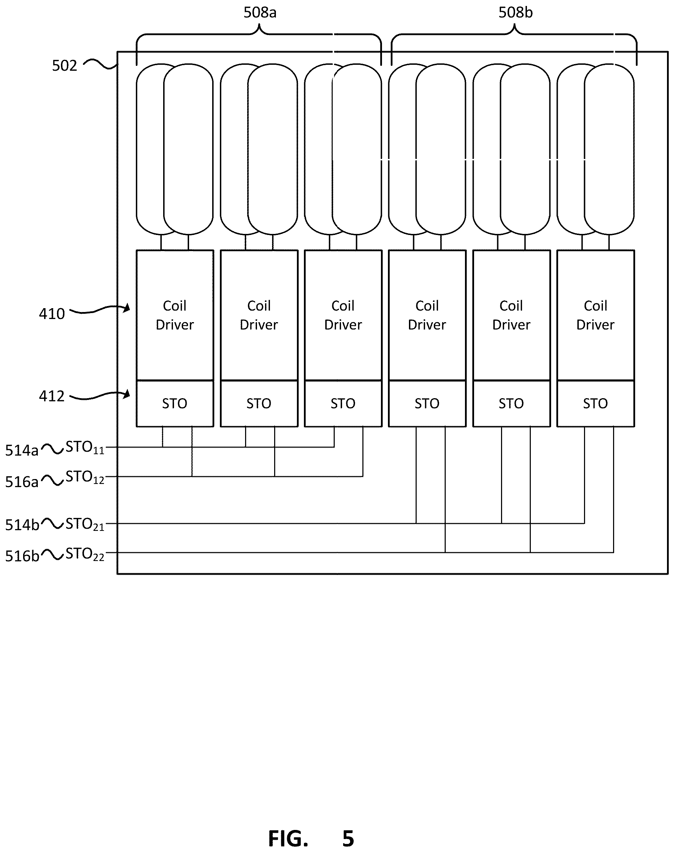

FIG. 5 depicts a further track section of a linear motor conveyor system using STO functionality. The track section is similar to that described above with regard to FIG. 4. However, in contrast to the track section 402 which enabled all of the STO functionality with one pair of STO signals, 414, 416, the track section 502 is arranged in order to provide two separate STO portions on the track section. As depicted the plurality of coils are grouped into two separate STO groups 508a, 508b. The coil drivers 410 and STO functionality 412 is substantially the same regardless of what STO group the coils are grouped together in. However, two different pairs of STO signals are used to enable the STO functionality of coil drivers of the coils in each respective STO group 508a, 508b.

As depicted in FIG. 5, the coils in the first STO group 508a are de-energized by the first pair of STO signals 514a, 516a, namely STO₁₁, STO₁₂, while the coils in the second STO group 508b are de-energized by the second pair of STO signals 514b, 516b, namely STO₂₁, STO₂₂. The STO functionality depicted in FIG. 5 is substantially similar to that as described above in FIG. 4 however the STO functionality can be enabled over a shorter track length. It will be appreciated, that as the number of STO groups increases for a length of track, and assuming that the coil density remains the same, the shorter the STO group will be which may be desirable. However, as the number of STO groups increases, the more STO signals will be required which may increase the complexity of the STO functionality. Advantageously, the STO functionality of each coil driver does not change even if the STO grouping of coils changes which can simplify providing different sizes of STO groupings since the same STO and driver can be used and only additional control signals need to be provided.

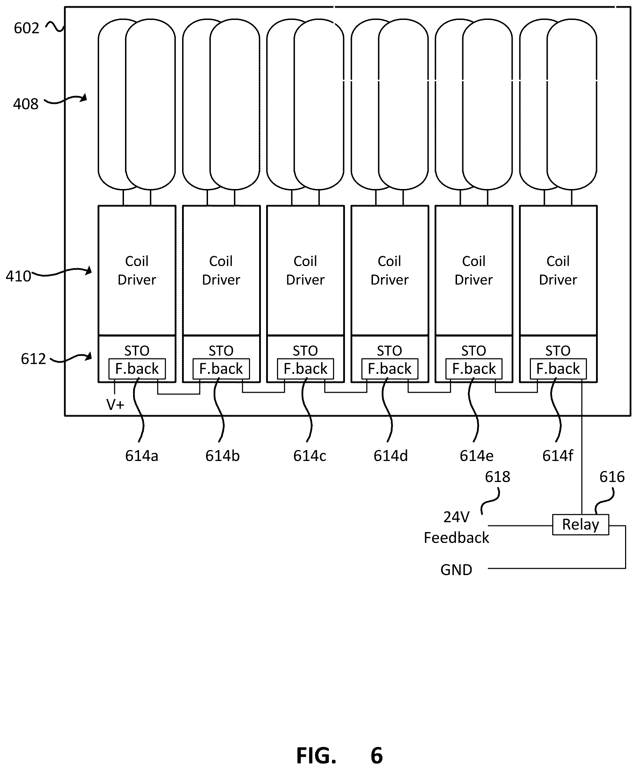

FIG. 6 depicts a further track section of a linear motor conveyor system using STO functionality with feedback signals. While the above has described STO functionality that redundantly de-energizes the coil drivers and fails in a safe, de-energized, state, additional safety, and/or functionality, can be provided by feedback functionality. The feedback functionality provides a feedback signal as to whether or not all of the STO functionality has been successfully enabled.

As depicted in FIG. 6, the track section 602, similar to the track section 402 described above includes a plurality of coils with pairs of coils being individually controlled by respective coil drivers 410. Each of the coil drivers has or is associated with STO functionality 612, which is similar to the STO functionality described above; however includes additional feedback functionality 614a..614f (referred to collectively as feedback functions 614). Each of the feedback functions 614 are substantially the same and each provide an indication as to whether or not both safety channels have been successfully enabled. Each feedback functionality receives a feedback input voltage, which is depicted as being enabled-high and may be for example a 5V or 3.3V signal, and outputs either the enabled-high voltage if both safety channels are successfully enabled, namely there is no current flowing and there is a short to ground. If either of the safety channels is not successfully enabled, the feedback functionality will output no signal, which may be a signal having a low voltage. Further, if the feedback functionality is provided with a low voltage input signal it will output no signal. As depicted in FIG. 6, each of the feedback functions 614 can be chained together, with an input to the feedback chain connected to a high-voltage signal as depicted at feedback functionality 614a. The feedback chain will output a high-voltage signal if all of the feedback functions in the chain indicate that both safety channels are enabled successfully. If any of the feedback functions in the feedback chain indicate that at least one of the safety channels was not enabled successfully, the feedback chain will output no signal. The output of the feedback chain is provided by the last feedback functionality of the chain depicted as feedback functionality 614f in FIG. 6. The feedback signal from the feedback chain can be used directly. However, the feedback signal from the feedback chain may be a relatively low-voltage signal such as 5V or 3.3V, while other components may require a feedback signal at a higher voltage. In such case the feedback signal can be used to control a relay 616 that switches the high voltage feedback signal, depicted as a 24V feedback signal 618.

It is noted that the STO control signals are omitted in FIG. 6 for the clarity of the FIG. In FIG. 6, it is assumed that all of the coils are grouped in a single STO group controlled by a single pair of STO signals. If multiple STO groups are present, each group has its own respective feedback signal provided by a chain of the feedback functions of the coil drivers in each STO group.

The feedback signal may be used for a variety of purposes. For example, in the case of opening a guarding door, the door may be controllably locked, and only unlocked if the feedback signal indicates that the STO functionality has been successfully enabled on the track section, or sections, enclosed by the guarding.

The above has described a redundant STO system for de-energizing coils of a portion of a linear motor conveyor. The STO functionality may only de-energize the motor power supplied to the coils while still maintain the supply of the operating power of the coil driving circuitry. This may allow for monitoring and communication with the circuitry, including the power circuitry even when the STO functionality is enabled.

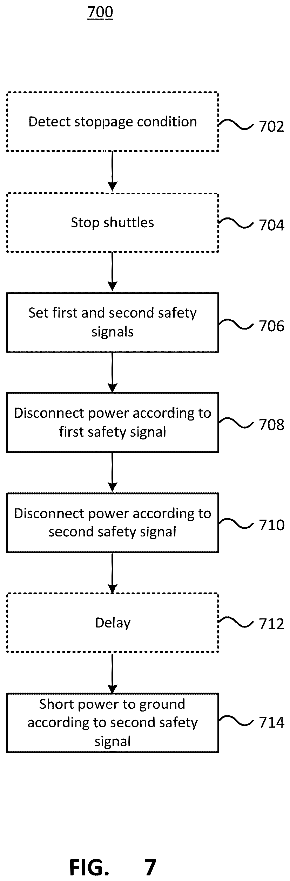

FIG. 7 depicts a method of implementing the STO functionality on a linear motor conveyor track. The method 700 may begin with detecting a stoppage condition (702). The stoppage condition may be a condition that requires the shuttles to stop moving, and further prevent the shuttles from moving under power. The stoppage condition may be associated with the entire conveyor track or just a portion of the track. Once the stoppage condition is detected, any shuttles moving over the portion of the track associated with the condition are stopped (704). Additionally, any shuttles that are moving into the portion of the track associated with the condition may be prevented from entering the area. The first and second safety signals are set (706) in order enable the first and second safety channels of safe torque-off functionality. When setting the first and second safety signals, the first signal may be set before the second signal in order to provide a delay between operation of the first safety channel and the second safety channel. However, the signals may be set simultaneously, or the second safety signal may be set before the first safety signal.

The power supply for driving the coils of the linear motor is disconnected according to the first safety signal (708). Accordingly, when the first safety signal is set, the power supply is disconnected and, assuming the disconnect is successful, the coils of the linear motor cannot be energized and as such the shuttles cannot be moved under power by the linear motor. It is noted here that the shuttles may still be manually moved even if the linear motor is de-energized.

Independent of disconnecting the power according to the first safety signal, the power is also disconnected according to the second safety signal (710), which can prevent shorting the motor power to ground. A delay (712) after disconnecting the power according to the second safety can be provided before shorting the power input to ground according to the second safety signal (714). The delay can help ensure that the shorting of the power input to ground is only done once the power is disconnected.

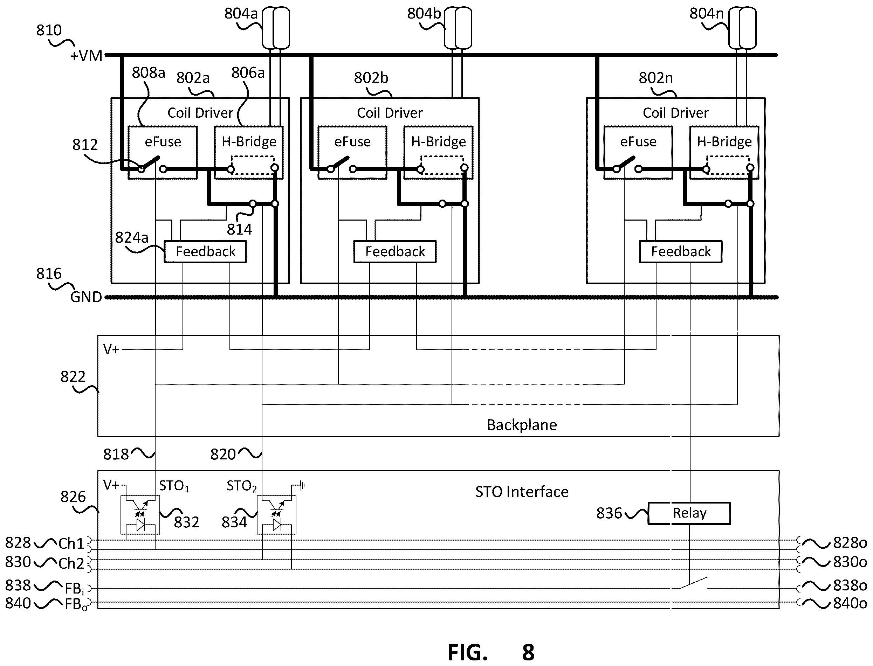

FIG. 8 depicts a further implementation of the STO functionality on at least a portion of a track section. FIG. 8 depicts a track section that includes a plurality of coil drivers 802a..802n (referred to collectively as coil drivers 802) each controlling a pair of coils 804a..804n (referred to collectively as coils 804). Each of the coil drivers 802 are substantially the same and only the components of the coil driver 802a are described in further detail.

The power supplied to each coil of the pair of coils 804a is controlled individually by respective H-bridges 806a. That each coil of the pair of coils 804a is controlled through a respective H-bridge. The coil power is supplied to the H-bridge 806a through an eFuse 808a, which in turn is connected to the high voltage motor power supply 810 depicted as +VM. The eFuse may be provided by various eFuses, including for example TPS48110-Q1 from Texas Instruments ^{™}. In addition to acting as a fuse, the eFuse 812 is able to act as a controllable switch 812. The eFuse 812 acts as the switch of the first safety channel in order to disconnect the H-Bridge from the high voltage motor power supply 810.

A second controllable switch 814, which may be provided for example by a MOSFET or similar component, is provided which can short the power supplied to the H-bridge to ground 816. The second switch 814 acts as an additional safety channel.

The switch functionality 812 of the eFuse 808a is controlled by a first STO signal 818, and the second switch 814 is controlled by a second STO signal 820. As described above, the second STO signal may also be used to control the second switch 814 in order to disconnect the power supply; however, this connection is not shown in FIG. 8 for simplicity of the drawing. It is noted that the eFuse 808a is able to disconnect the power based on a plurality of different inputs; however, if the eFuse has only one input for controlling the disconnection, the STO signals 818 and 820 can be multiplexed such that either signal can control the switching. As can be seen in FIG. 8, the STO functionality is provided by two safety channels each of which independently prevents powering the H-Bridge. The first safety channel disconnects the H-Bridge from the power supply, while the second safety channel shorts the power to the H-Bridge to ground.

The coil drivers 802 may be provided as respective coil driver boards that can be connected to a backplane 822 within the track section. Although a single backplane 822 is depicted, a single track section may include two, or more, backplanes 822 that are connected together. The backplane 822 is depicted as providing communication signals to the respective coil driver boards, however the backplanes may include additional functionality not depicted including control functionality and/or other communication functionality. In addition to the coil driver boards 802 connected to the backplane, an STO interface board 826 can be connected to the backplane.

The STO interface 826 can provide circuitry for providing the STO signals 818, 820. As depicted, the STO interface may provide positive and negative inputs for the first safety channel signal 828 and positive and negative inputs for the second safety channel signal 830. It is noted that the STO interface may include safety channel signal outputs 828o, 830o, which may be used to connect to another STO interface and join the STO groups together.

The signals on the safety channels 828, 830 may be converted to the STO signals 818, 820 by respective optocouplers 832, 834. Although not depicted in FIG. 8, other components can be provided in order to clean the signal provided to the optocouplers and increase the signal to noise ratio of the STO signals 818, 820. As depicted, the STO signals 818, 820 can be distributed to each of the coil drivers 802 connected to the backplane via connections of the backplane 822.

In addition to the STO functionality described above, the track section may include feedback functionality that provides an indication of whether all of the STO functionality of each coil driver is successfully enabled. Each of the coil drivers 802 includes feedback functionality 824a that can detect or determine if the power is disconnected as well as detect or determine if the power is shorted to ground. The feedback functionality 824a receives a high-enabled voltage signal depicted as V+ for the first coil driver 802a and if the power is disconnected and the power is shorted outputs the high voltage signal. If either the power is not disconnected or the power is not shorted to ground the feedback functionality 824a outputs no voltage signal. Further, if the input to the feedback signal is low, the output will be low regardless of whether both STO channels are successfully enabled. As depicted, the feedback functionality of each coil driver are chained together through the backplane 822, with the feedback output from each coil driver being connected to the feedback input of the subsequent coil driver. The feedback output of the final coil driver in the feedback chain can be provided to a relay 836 that controls switching of a high voltage feedback signal. The high voltage feedback signal may be supplied to a feedback input 838 on the STO interface. The feedback output 840 may complete the feedback signal path. As depicted in FIG. 8, the STO interface may include outputs 838o, 840o for feedback input and output signals. If another STO interface is connected in order to join STO groups together, the outputs 838o, 840o of one STO interface can be connected to the inputs 838, 840 of the other STO interface. The outputs 838o, 840o of the last STO interface in the chain, or the only STO interface if none are chained together, are connected together in order to complete the high voltage feedback signal between the input 838 and output 840 which can be switched on or off by the feedback relay 836.

Although various features are described with reference to FIG. 8 as being implemented on coil driver boards, a backplane board and an STO interface board, it will be appreciated that the same functionality may be implemented in other ways. For example, the functionality depicted as being provided by the STO interface could be combined onto the backplane.

The above has described STO functionality that can redundantly de-energize driving coils of a section of a linear motor conveyor system. The STO functionality uses two safety channels controlled by respective STO signals. It is possible to provide further safety functionality to the coil drivers. The redundant safety channels described above have ensured that the motor power is not supplied and so the driving power cannot be supplied. It may also be possible to disconnect, and/or possibly short, the control power supplied to the control functionality of the coil driver. In such a case, the control functionality that controls supplying the coil power cannot function and as such coil power is not supplied.

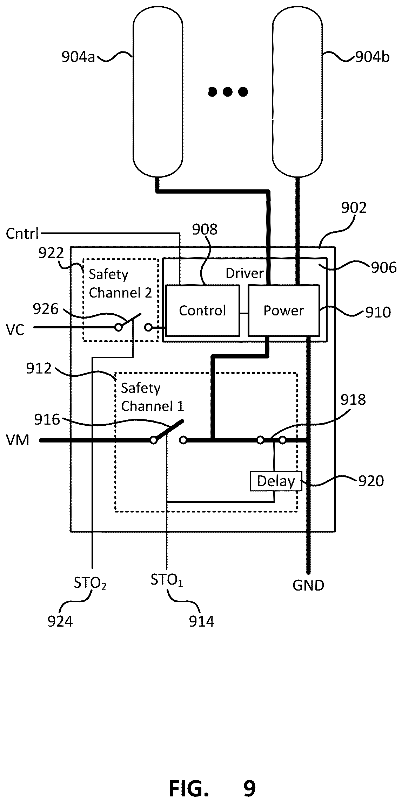

FIG. 9 depicts a further illustrative implementation of the STO functionality. The electronics 902 are similar to those described above, and are use to drive one or more electromagnetic coils 904a, 904b with coil power. The coil power supplied to the respective coils creates an electromagnetic field that can provide a motive force to a shuttle. The coil power supplied to the coils is provided from a coil driver 906 that includes control functionality 908 and power functionality 910. The control functionality may receive one or more control signals that provide an indication of how much power to supply to respective coils. The control circuitry 908 can then control the power circuitry 910 in order to supply the required coil power. The power circuit is supplied with motor power, which it can convert to the coil power. The power circuit may be provided by one or more H-bridges, with possibly one H-bridge for each coil that is controlled by the coil driver 906.

The electronics 902 also include redundant STO functionality with a first safety channel 912 controlled by a first STO signal STO₁. The first safety channel may comprise one or more safety features for de-energizing the coils. For example, the first safety channel is depicted as including a switch or eFuse 916 that can disconnect the motor power (VM) supply from the power circuitry. Further, the safety channel 912 may further include a switch 918, which may be provided by a MOSFET, that further shorts the motor power supply to ground so that if the switch 916 was not successful in disconnecting the motor power supply, it would be shorted to ground and the coils would still be de-energized. Since both switches 916, 918 are controlled by STO₁, a delay 920 may be applied to the STO₁ signal controlling the shorting switch 918 in order to ensure that the motor power supply is first disconnected before it is shorted to ground.

The electronics 902 may also include a second safety channel 922 controlled by a second safety signal STO₂. The second safety channel 922 is depicted a switch 926 that is controlled by STO₂ and can disconnect the operating power supply (VC) for the control circuitry 908 of the coil driver 906. Accordingly, when the operating power supply is disconnected from the control circuitry 908, the control circuitry no longer provides the control to the power circuitry 910 and as such the power circuitry, even if supplied with the motor power, will not provide the coil power to the coils. While depicted as a switch that disconnects the operating power supply to the control circuitry, it is possible to additionally, or alternatively short the power supply to ground to ensure that the control circuitry is not functional.

The control circuitry 908 may include circuitry for monitoring and communication with the circuitry, including the power circuitry. Accordingly, if the control circuitry is powered off by disconnecting the operating power supply, these functions will not be available. It is possible to separate the power control circuitry used to control the power circuitry from other control functionality and only disconnect the operating power control circuitry from the power control circuitry in order to keep the monitoring and communication functionality operational. Further, when re-energizing the coil driver, it may be desirable to first reconnect the operating power supply to the control circuitry for a sufficient period of time to allow the control circuitry to power on and resume operation before reconnecting the motor power supply.

The above has described STO functionality that includes two safety channels controlled by two STO signals. Each of the safety channels may have one or more mechanisms for preventing power being supplied to the coils. For example, in FIG. 9, while the electronics are depicted as having two safety channels, the electronics have three separate mechanisms for preventing power being supplied to the coils, including disconnecting the motor power, shorting the motor power, and disconnecting the operating power. It will be appreciated that the different mechanisms may be considered as a single safety channel or as multiple safety channels. Further, while each safety channel is described as being controlled by a respective STO signal, it is possible that each safety channel and/or safety mechanism may be controlled by any of the STO signals. That is, the STO signals may be multiplexed together so that if any STO signal is enabled, all of the STO safety mechanisms will be enabled.

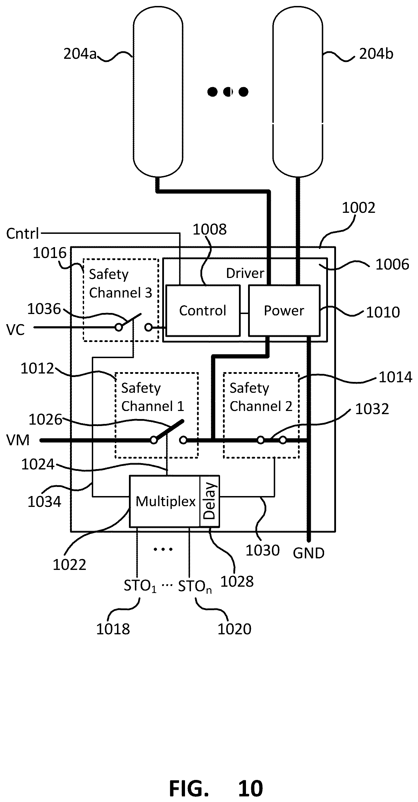

FIG. 10 depicts a further illustrative implementation of the STO functionality. The electronics 1002 are similar to those described above, and are use to drive one or more electromagnetic coils 1004a, 1004b with coil power. The coil power supplied to the respective coils creates an electromagnetic field that can provide a motive force to a shuttle. The coil power supplied to the coils is provided from a coil driver 1006 that includes control functionality 1008 and power functionality 1010. The control functionality may receive one or more control signals that provide an indication of how much power to supply to respective coils. The control circuitry 1008 can then control the power circuitry 1010 in order to supply the required coil power. The power circuit is supplied with motor power, which it can convert to the coil power. The power circuit may be provided by one or more H-bridges, with possibly one H-bridge for each coil that is controlled by the coil driver 1006.

The electronics 1002 also include redundant STO functionality comprising a plurality of different safety channels, each of which may comprises one or more mechanisms for de-energizing the coils. FIG. 10 depicts three separate safety channels 1012, 1014 and 1016. The safety channels may be each controlled by one or more control signals. The control signals may be controlled by one or more STO signals depicted as STO₁ 1018 and STO₂ 1020 which may be multiplexed 1022. The multiplexing of the STO signals can set all of the control signals of the safety channels if any of the STO signals are enables. The multiplex functionality 1022 can provide a first control signal 1024 to the first safety channel that controls a switch or eFuse 1026 to disconnect the motor power supply (VM) from the power circuit 1010.

The multiplex functionality may include delay functionality 1028 to provide a delay to the control signal for the second safety channel 1014 comprising a switch for shorting the motor power supply. The control signal delay ensures that the motor power supply is first disconnected by the first safety channel prior to shorting the motor power supply to the ground by the second safety channel. It is possible for the first and second safety channels to be controlled by the same control signal in which case the delay may be applied the control signal from the multiplexer prior to second safety channel, similar to the signal delay described above with respect to FIG. 3.

The multiplex functionality 1022 may further set a control signal 1034 that controls the third safety channel 1016. As depicted, the third safety channel may comprises a switch controlled by the control signal 1034 that disconnects the operating power supply (VC) for the control circuitry 1008.

As described, it is possible to multiplex a plurality of STO signals in order to enable a plurality of safety channels if any of the STO signals are enabled. It will be appreciated that each of the safety channels may be controlled directly by respective STO signals instead of multiplexing the STO signals together. Further, the safety channels are depicted as comprising a single mechanism for de-energizing the coils; however, it is possible for one or more of the safety channels to comprise a plurality of mechanisms for de-energizing the coils.

The multiplexing functionality may include delay functionality for delaying

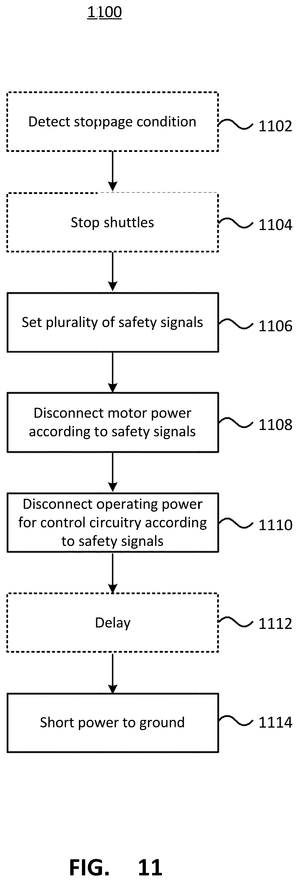

FIG. 11 depicts a method of implementing the STO functionality on a linear motor conveyor track. The method 1100 may begin with detecting a stoppage condition (1102). The stoppage condition may be a condition that requires the shuttles to stop moving, and further prevent the shuttles from moving under power. The stoppage condition may be associated with the entire conveyor track or just a portion of the track. Once the stoppage condition is detected, any shuttles moving over the portion of the track associated with the condition are stopped (1104). Additionally, any shuttles that are moving into the portion of the track associated with the condition may be prevented from entering the area. A plurality of safety signals are set (1106) in order enable the safety channels of safe torque-off functionality. The plurality of safety signals may be used in order to provide redundancy in the signalling. Additionally, or alternatively, the different safety signals may be provided from different control systems or components. When setting the plurality of safety signals, the signals may be set in a particular order such as setting a first safety signal, and then after a set delay setting a second safety signal. Alternatively, the plurality of signals may be set without regard to the setting of other safety signals.

The motor power supply for driving the coils of the linear motor is disconnected according to the safety signals (1108). For example, if any one of the safety signals is set, the motor power supply can be disconnected. Accordingly, when a safety signal is set, the power supply is disconnected and, assuming the disconnect is successful, the coils of the linear motor cannot be energized and as such the shuttles cannot be moved under power by the linear motor.

Independent of successfully disconnecting the motor power, the operating power for the control circuitry is also disconnected according to the safety signals (1110). Accordingly, with the operating power disconnected from the control circuit, the power circuit will not receive any control signals from the control circuit and so will not supply any coil power to the coils. A delay (1112) after disconnecting the motor power can be provided and then the motor power supply may be shorted to ground (1114). The delay can help ensure that the shorting of the power input to ground is only done once the power is disconnected.

It will be appreciated by one of ordinary skill in the art that the system and components shown in FIGs. 1 - 11 may include components and/or steps not shown in the drawings. For simplicity and clarity of the illustration, elements in the figures are not necessarily to scale, are only schematic and are non-limiting of the elements structures. It will be apparent to persons skilled in the art that a number of variations and modifications can be made without departing from the scope of the invention as defined in the claims.

Although certain components and steps have been described, it is contemplated that individually described components, as well as steps, may be combined together into fewer components or steps or the steps may be performed sequentially, non-sequentially or concurrently. Further, although described above as occurring in a particular order, one of ordinary skill in the art having regard to the current teachings will appreciate that the particular order of certain steps relative to other steps may be changed. Similarly, individual components or steps may be provided by a plurality of components or steps. One of ordinary skill in the art having regard to the current teachings will appreciate that the components and processes described herein may be provided by various combinations of software, firmware and/or hardware, other than the specific implementations described herein as illustrative examples.

The techniques of various embodiments may be implemented using software, hardware and/or a combination of software and hardware. Various embodiments are directed to apparatus, e.g. a node which may be used in a communications system or data storage system. Various embodiments are also directed to non-transitory machine, e.g., computer, readable medium, e.g., ROM, RAM, CDs, hard discs, etc., which include machine readable instructions for controlling a machine, e.g., processor to implement one, more or all of the steps of the described method or methods.

Some embodiments are directed to a computer program product comprising a computer-readable medium comprising code for causing a computer, or multiple computers, to implement various functions, steps, acts and/or operations, e.g. one or more or all of the steps described above. Depending on the embodiment, the computer program product can, and sometimes does, include different code for each step to be performed. Thus, the computer program product may, and sometimes does, include code for each individual step of a method, e.g., a method of operating a communications device, e.g., a wireless terminal or node. The code may be in the form of machine, e.g., computer, executable instructions stored on a computer-readable medium such as a RAM (Random Access Memory), ROM (Read Only Memory) or other type of storage device. In addition to being directed to a computer program product, some embodiments are directed to a processor configured to implement one or more of the various functions, steps, acts and/or operations of one or more methods described above. Accordingly, some embodiments are directed to a processor, e.g., CPU, configured to implement some or all of the steps of the method(s) described herein. The processor may be for use in, e.g., a communications device or other device described in the present application.

Numerous additional variations on the methods and apparatus of the various embodiments described above will be apparent to those skilled in the art in view of the above description. Such variations are to be considered within the scope of the current disclosure.

## Claims

1. A redundant safety control system for a linear motor conveyor comprising:
safety control inputs comprising first and second inputs for receiving respective first and second safety signals indicating a condition requiring de-energizing driving power of at least a section of the linear motor conveyor;
a first safety circuit controlled by the safety control inputs, the first safety circuit controllably disconnecting power supplied to a power circuit based on the control inputs, the power circuit providing power to drive at least one coil of the at least one section of the linear motor conveyor; and
a second safety circuit controlled by the safety control inputs, the second safety circuit shorting the power supplied to the power circuit to ground based on the second input control signal.

2. The redundant safety control system of claim 1, further comprising a third safety circuit controlled by the safety control inputs, the third safety circuit disconnecting operating power supplied to control circuitry controlling the power circuit.

3. The redundant safety control system of claim 1 or 2, wherein the second safety circuit comprises an input signal delay to delay the shorting of the power relative to the disconnecting of the power supplied to the power circuit.

4. The redundant safety control system of claim 3, wherein the input signal delay provides a sufficient delay after disconnecting of the power supplied to the power circuit to avoid current transients when shorting of the power.

5. The redundant safety control system of any one of claims 1 to 4, wherein the first safety circuit comprises a controllable eFuse.

6. The redundant safety control system of any one of claims 1 to 5, wherein the power circuit comprises an H-bridge circuit.

7. The redundant safety control system of any one of claims 1 to 6, wherein the second safety circuit shorts the power supplied to the power circuit through a MOSFET.

8. The redundant safety control system of any one of claims 1 to 7, wherein the power circuit provides power to linear motor components for providing a motive force to the shuttles on the section of the linear motor conveyor.

9. The redundant safety control system of claim 8, wherein the track section comprises a plurality of coil drivers each for driving one or more respective coils of the linear motor conveyor.

10. The redundant safety control system of any one of claims 1 to 9, wherein the first and second safety signals are set in response to one or more of:
opening of a guarding door;
detected presence of an operator in a controlled area;
activation of an emergency stop switch;
detection of an error at the conveyor; and
a manually provided indication of a desire to stop movement of shuttles.

11. The redundant safety control system of any one of claims 1 to 10, further comprising one or more feedback signals providing an indication that no power is supplied to the power circuit.

12. A method of redundantly stopping movement of a shuttle on a track section of a linear motor conveyor, the method comprising:
setting both a first safety signal and a second safety signal, the first and second safety signals indicating a condition requiring stoppage of shuttles moving on at least a section of the linear motor conveyor;
disconnecting power supplied to a power circuit used to drive one or more coils of the linear motor conveyor in response to the safety signals; and
disconnecting power supplied to the power circuit and shorting the power input of the power circuit to ground in response to the safety signals.

13. The method of claim 12, wherein disconnecting the power supplied to the power circuit uses a controllable eFuse.

14. The method of claim 12 or 13, wherein shorting the power supplied to the power circuit uses a MOSFET.

15. A non-transitory computer readable medium storing instructions which when executed by a processor perform a method according to any one of claims 12 to 14.
